Europäisches Patentamt

European Patent Office

Office européen des brevets

(11) Numéro de publication: **0 336 336 B1**

## FASCICULE DE BREVET EUROPEEN

(45) Date de publication de fascicule du brevet: **06.10.93** (51) Int. Cl.5: **H04L 1/24**

(21) Numéro de dépôt: **89105810.9**

(22) Date de dépôt: **03.04.89**

(54) **Circuit de mesure de taux d'erreurs pour équipement de transmission numérique synchrone.**

(30) Priorité: **07.04.88 FR 8804605**

(43) Date de publication de la demande:
**11.10.89 Bulletin 89/41**

(45) Mention de la délivrance du brevet:
**06.10.93 Bulletin 93/40**

(84) Etats contractants désignés:
**DE ES FR GB IT NL SE**

(56) Documents cités:
**US-A- 3 914 740**

**37TH IEEE VEHICULAR TECHNOLOGY CONFERENCE, Tampa, Florida, 1-3 juin 1987, pages 552-559, IEEE, New York, US; C. GUT-ZEIT: "Test equipment for digital channel analysis and its application in digital mobile radio"**

**TELECOMMUNICATIONS & RADIO ENGINEE-RING, vol. 32/33, no. 10, octobre 1978, pages 54-57, Scripta Publishing Co., Washington, US; E.B. ALEKSEYEV et al.: "The measurement of the error rate of digital transmission systems"**

(73) Titulaire: **ALCATEL TELSPACE**
**5, rue Noel Pons**
**F-92734 Nanterre Cédex(FR)**

(72) Inventeur: **Roux, Pierre**
**35 Boulevard de la Mission Marchand**
**F-92400 Courbevoie(FR)**

(74) Mandataire: **Weinmiller, Jürgen et al**
**Lennéstrasse 9**
**Postfach 24**
**D-82336 Feldafing (DE)**

EP 0 336 336 B1

## Description

La présente invention est relative à la mesure du taux d'erreurs dans les équipements de transmission numérique synchrone.

Les bancs de mesure actuellement connus pour des équipements de transmission numérique synchrone utilisent, comme signal de test, des signaux périodiques constitués de suites binaires pseudoaléatoires de grande longueur, à polynômes générateurs qui sont assimilables, du point de vue de leurs caractéristiques statistiques, aux signaux numériques binaires transmis par les équipements de transmission numérique synchrone lors de leur utilisation normale et qui ont la propriété de pouvoir être détectés, de manière autosynchronisée, sans qu'il soit nécessaire de prendre en considération le délai de transmission apporté par l'équipement de transmission numérique synchrone testé. Pour des détails sur la structure de ces bancs de mesure, on peut se rapporter à la partie introductive de l'article de F.L. Adams paru sous le titre : "An Improved Pseudo-Random Digital Sequence Error Detector" dans la revue Post Office Electrical Engineers journal vol. 73, Oct. 1980 p 186, 187.

Ces bancs de mesure ont l'inconvénient de ne pas permettre le choix d'un signal binaire périodique de test autre que la ou les suites binaires pseudoaléatoires à polynômes générateurs pour lesquels ils sont prévus alors qu'il peut être intéréssant dans certains cas de prendre comme signal de test une séquence binaire périodique particulière, très défavorable, compte tenu des caractéristiques spécifiques de l'équipement de transmission numérique sous test.

On connaît par ailleurs, du document Telecommunications & Radio Engineering, vol. 32/33, n° 10, octobre 1978, pages 54-57, Scripta Publishing Co., Washington, US; E.B. Alekseyev et al. : "The measurement of the error rate of digital transmission systems", un circuit

de mesure de taux d'erreurs pour un équipement de transmission numérique synchrone transmettant une séquence périodique de test et délivrant en réponse un signal numérique synchrone de données de réception avec son signal d'horloge de réception, comportant :
- un circuit de vol de cycle opérant sur le signal d'horloge de réception,
- un générateur local de la séquence périodique de test cadencé par le signal d'horloge de réception lui parvenant par le circuit de vol de cycle,
- un circuit comparateur comparant le signal numérique synchrone de données de réception avec la séquence périodique de test engendrée par le générateur local,

- un circuit de comptage d'erreurs placé à la suite du circuit comparateur et
- un circuit de détection de configuration de discordance qui est connecté à la suite du circuit comparateur et qui commande le circuit de vol de cycle de manière à opérer des vols de cycle en cas de discordances successives entre le signal numérique synchrone de réception et la séquence périodique de test engendrée par la générateur local.

La présente invention a pour but un circuit de mesure de taux d'erreurs pour un équipement de transmission numérique synchrone qui s'accommode d'un signal périodique de test de forme arbitraire et qui soit capable de fonctionner quel que soit le délai de transmission apporté par l'équipement de transmission numérique sous test.

Elle a pour objet un circuit de mesure de taux d'erreurs pour un équipement de tranmsission numérique synchrone qui transmet une séquence périodique de test et délivre en réponse un signal numérique synchrone de données de réception avec son signal d'horloge de réception.

Ce circuit de mesure de taux d'erreurs comporte :
- un circuit de vol de cycle opérant sur le signal d'horloge de réception,
- un générateur local de la séquence périodique de test cadencé par le signal d'horloge de réception lui parvenant par l'intermédiaire du circuit de vol de cycle,
- un circuit comparateur comparant le signal numérique synchrone de données de réception avec la séquence périodique de test engendrée par le générateur local,
- un circuit de comptage d'erreurs disposé à la suite du circuit comparateur et
- un circuit de détection de configurations de discordance qui est connecté à la suite du circuit comparateur et qui commande le circuit de vol de cycle de manière à opérer des vols de cycle en cas de discordances successives entre le signal numérique synchrone de données de réception et la séquence périodique de test engendrée par le générateur local,

et est essentiellement caractérisé en ce que le générateur local comporte une mémoire stockant les échantillons successifs de la séquence périodique de test et un compteur d'adressage de ladite mémoire incrémenté par le signal d'horloge de réception par l'intermédiaire du circuit de vol de cycle, en ce que le circuit de détection de configurations de discordance comporte un registre à décalage à plusieurs étages qui est cadencé par le signal d'horloge de réception et dont l'entrée de données est connectée en sortie du circuit comparateur, et une porte logique de type "et" à plusieurs entrées connectées aux sorties des étages du registre à décalage, et en ce que le circuit de vol de cycle comporte :

- un diviseur de fréquence par P, P étant un entier plus grand que 1, incrémenté par le signal d'horloge de réception,
- un registre de type D cadencé par le signal d'horloge de réception et connecté par son entrée de données à la sortie du diviseur de fréquence,
- une première porte logique de type "et" à deux entrées connectées l'une à la sortie du diviseur de fréquence et l'autre à la sortie complémentée $\overline{Q}$ du registre de type D,
- une porte logique de type "non et" à deux entrées connectées l'une à la sortie de la première porte logique de type "et" et l'autre à la sortie du circuit de détection de configurations de discordance et
- une deuxième porte logique de type "et" à deux entrées l'une connectée à la sortie de la porte logique de type "non et" et l'autre recevant le signal d'horloge de réception.

D'une manière préférentielle le circuit de vol de cycle opère sur des périodes non consécutives du signal d'horloge de réception.

D'autres caractéristiques et avantages de l'invention ressortiront de la description ci-après d'un mode de réalisation donné à titre d'exemple. Cette description sera faite en regard de la figure unique du dessin qui représente le schéma synoptique d'un circuit de mesure de taux d'erreurs conforme à l'invention.

Le circuit de mesure de taux d'erreurs représenté sur la figure comporte une entrée 1 sur laquelle est appliqué le signal binaire de données de réception S délivré par un équipement de transmission numérique synchrone sous test en réponse à une séquence périodique de test et une entrée 2 sur laquelle est appliqué un signal d'horloge de réception H qui provient également de l'équipement de transmission numérique synchrone sous test et qui rythme la succession des données dans le signal binaire de données de réception S. L'entrée 1 mène à un circuit comparateur 10 qui compare le signal binaire de données de réception S avec une séquence périodique de test engendrée par un générateur local 20 et qui commande l'entrée d'un circuit de comptage d'erreurs 30 affichant le taux d'erreurs. Le générateur local 20 a son débit rythmé par un signal d'horloge H′ provenant d'un circuit de vol de cycle 40 qui opère sur le signal d'horloge de réception H et qui est commandé par un circuit 50 de détection de configurations de discordance connecté en sortie du comparateur 10.

Le circuit comparateur 10 qui compare la séquence périodique de test délivrée par le générateur local 20 avec celle présente dans le signal binaire de données de réception S est une porte logique de type "ou exclusif" à deux entrées délivrant un niveau logique 0 en cas de concordance et un niveau logique 1 en cas de discordance entre les données binaires provenant de l'entrée 1 et du générateur local 20.

Le circuit de comptage d'erreurs 30 est constitué, de manière classique d'un compteur qui compte les périodes du signal d'horloge de réception H se produisant pendant l'apparition d'un niveau logique 1 en sortie du comparateur 10 et qui est associé à un circuit de lecture et de remise à zéro périodique permettant de lui faire afficher un nombre d'erreurs par unité de temps.

Le générateur local 20 de séquence périodique de test comporte une mémoire 21 qui stocke les N bits de la séquence périodique de test appliquée par ailleurs à l'équipement de transmission numérique synchrone sous test et qui est adressée par un compteur par N 22 incrémenté par le signal d'horloge H′ provenant du circuit de vol de cycle 40.

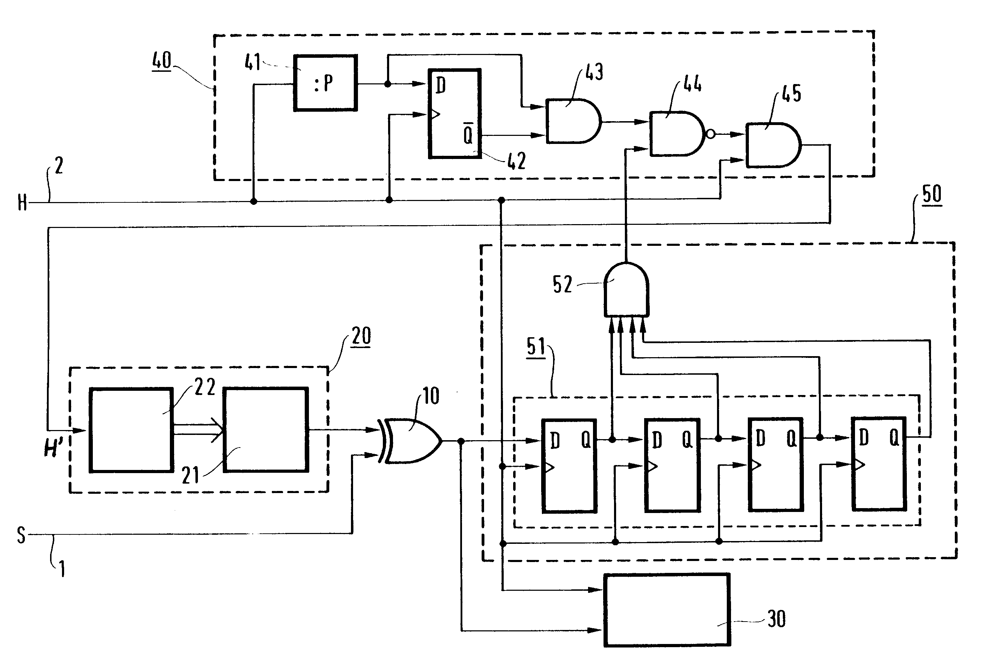

Le circuit 50 de détection de configurations de discordance comporte un registre à décalage à R étages (R vaut quatre dans la figure 1) qui est cadencé par le signal d'horloge de réception H et dont l'entrée de données est connectée à la sortie du comparateur 10, et une porte logique de type "et" 52 à R entrées connectées aux sorties non complémentées Q des R étages du registre à décalage 51. Le registre à décalage 51 mémorise sur R périodes consécutives du signal d'horloge de réception H les états de concordance et de discordance entre les données reçues et celles provenant du générateur local 20. La porte de type "et" 52 détecte en passant au niveau logique 1 les suites de R discordances successives.

Le circuit de vol de cycle 40 comporte un diviseur de fréquence par P 41 incrémenté par le signal d'horloge de réception H appliqué sur l'entrée 2, un registre de type D 42 cadencé par le signal d'horloge de réception H et connecté par son entrée de données D à la sortie du diviseur 41, une porte logique de type "et" 43 à deux entrées connectées l'une à la sortie du diviseur 41 et l'autre à la sortie complémentée $\overline{Q}$ du registre de type D 42, une porte logique de type "non et" 44 à deux entrées connectées l'une à la sortie de la porte logique de type "et" 43 et l'autre à la sortie du circuit 50 de détection de configuration de discordance, et une porte logique de type "et" 45 à deux entrées connectées l'une à la sortie de la porte logique de type "non et" 44 et l'autre à l'entrée 2 recevant le signal d'horloge de réception H.

Le diviseur de fréquence 41 engendre un signal rectangulaire ayant P fois la période du signal d'horloge de réception H. Le registre de type D 42 retarde le signal rectangulaire issu du diviseur de fréquence 41 d'une période du signal d'horloge de réception H et l'inverse sur sa sortie complémentée $\overline{Q}$. La porte logique de type "et" 43 engendre un signal impulsionnel passant au niveau logique 1 une période du signal d'horloge de réception H parmi P. La porte logique de type "non et" 44 délivre en fonction de l'état logique de la sortie du circuit 50 de détection de configurations de discordance soit un niveau logique 1 constant soit un signal impulsionnel passant au niveau logique 0 une période du signal d'horloge de réception H sur P. La porte logique de type "et" 45 délivre en sortie du circuit de vol du cycle 40 soit le signal d'horloge de réception H non modifié si la sortie du circuit 50 de détection de configurations de discordance est au niveau logique 0 soit le signal d'horloge de réception H privé d'une période sur P si la sortie du circuit 50 de détection de configurations de discordance est au niveau logique 1.

Le nombre P par lequel opère le diviseur 41 est choisi supérieur au nombre R d'étages du registre à décalage 51 de manière que ce registre à décalage soit toujours entièrement rempli entre deux vols de cycle consécutifs.

Le nombre R est choisi en fonction d'une valeur maximale du taux d'erreurs recherché, de manière qu'à cette valeur maximale, une suite de R erreurs consécutives soit extrêmement peu probable.

Le circuit de mesure de taux d'erreurs donne une valeur correcte de taux d'erreurs lorsque son générateur local 20 engendre une séquence périodique de test en phase avec la séquence périodique de test présente dans le signal de réception S. Si tel est le cas, il est accroché et compte tenu du choix de la valeur de R il y a très peu de chance que se produise une suite de R erreurs consécutives de transmission capable de le faire décrocher. Si tel n'est pas le cas, il est décroché et il se produit des suites de R configurations successives discordance entraînant des sauts de cycle concourant à un accrochage car il y a décorrélation entre la version de la séquence périodique de test engendrée par le générateur local 20 et celle présente dans le signal de réception S.

Le circuit de mesure de taux d'erreurs fonctionne correctement s'il passe beaucoup plus de temps à l'état accroché qu'à l'état décroché c'est-à-dire si son temps moyen d'accrochage est très inférieur à son temps moyen de décrochage ce qu'il est toujours possible d'obtenir par un choix adéquat du nombre d'étages R du registre à décalage 51 du circuit 50 de détection de configurations de discordance. En effet, étant donné un taux d'erreurs maximum Tx, la probabilité d'une suite de R erreurs successives conduisant à un décrochage est de :

$$(Tx)^R$$

de sorte que le temps moyen de décrochage est :

$$P.T. \, (Tx)^{-R} \qquad (1)$$

T étant la période du signal d'horloge de réception. A l'état de décrochage, la sortie du circuit comparateur 10 a une probabilité égale d'adopter un niveau logique 1 ou 0 puisqu'il y a décorrélation entre les signaux appliqués sur ses entrées de sorte que la probabilité d'un vol de cycle est :

$$(1/2)^R$$

que le temps moyen entre deux vols de cycle est :

$$P.T./(1/2)^{-R} = 2^R. \, P.T$$

et que le temps moyen d'accrochage depuis un état de décrochage qui est celui nécessaire pour effectuer N/2 vols de cycle, N étant la longueur de la séquence périodique de test, est :

$$N/2. \, 2^R.P.T = 2^{R-1}. \, P.T.N \qquad (2)$$

Le calcul des expressions (1) et (2) pour T = 7ns, Tx = 0,001, N = $2^{10}$ et P = R = 8 donne un temps moyen de décrochage de 1,8 $10^{10}$ ans et un temps moyen d'accrochage de 7ms ce qui montre qu'en pratique, le circuit de mesure de taux d'erreurs peut être constamment en état d'accrochage et délivrer une valeur correcte de taux d'erreurs.

On peut, sans sortir du cadre de la présente invention modifier certaines dispositions ou remplacer certains moyens par des moyens équivalents.

**Revendications**

1. Circuit de mesure de taux d'erreurs pour un équipement de transmission numérique synchrone transmettant une séquence périodique de test et délivrant en réponse un signal numérique synchrone de données de réception (S) avec son signal d'horloge de réception (H), comportant :
   - un circuit de vol de cycle (40) opérant sur le signal d'horloge de réception (H),
   - un générateur local (20) de la séquence périodique de test cadencé par le signal d'horloge de réception (H) lui parvenant par le circuit de vol de cycle (40),
   - un circuit comparateur (10) comparant le signal numérique synchrone de données de réception (S) avec la séquence périodique de test engendrée par le générateur local (20),
- un circuit de comptage d'erreurs (30) placé à la suite du circuit comparateur (10) et
- un circuit (50) de détection de configuration de discordance qui est connecté à la suite du circuit comparateur (10) et qui commande le circuit de vol de cycle (40) de manière à opérer des vols de cycle en cas de discordances successives entre le signal numérique synchrone de réception (S) et la séquence périodique de test engendrée par le générateur local (20)

caractérisé en ce que le générateur local (20) comporte une mémoire (21) stockant les échantillons successifs de la séquence périodique de test et un compteur (22) d'adressage de ladite mémoire incrémenté par le signal d'horloge de réception (H) par l'intermédiaire du circuit de vol de cycle (40), en ce que le circuit (50) de détection de configurations de discordance comporte un registre à décalage (51) à plusieurs étages qui est cadencé par le signal d'horloge de réception (H) et dont l'entrée de données est connectée en sortie du circuit comparateur (10), et une porte logique de type "et" (52) à plusieurs entrées connectées aux sorties des étages du registre à décalage (51), et en ce que le circuit de vol de cycle (40) comporte :
- un diviseur de fréquence (41) par P, P étant un entier plus grand que 1, incrémenté par le signal d'horloge de réception (H),
- un registre de type D(42) cadencé par le signal d'horloge de réception (H) et connecté par son entrée de données à la sortie du diviseur de fréquence (41),
- une première porte logique de type "et" (43) à deux entrées connectées l'une à la sortie du diviseur de fréquence (41) et l'autre à la sortie complémentée $\overline{Q}$ du registre de type D (42),
- une porte logique de type "non et" (44) à deux entrées connectées l'une à la sortie de la première porte logique de type "et" (43) et l'autre à la sortie du circuit (50) de détection de configurations de discordance et
- une deuxième porte logique de type "et" (45) à deux entrées l'une connectée à la sortie de la porte logique de type "non et" (44) et l'autre recevant le signal d'horloge de réception (H).

2. Circuit selon la revendication 1, caractérisé en ce que le circuit de vol de cycle (40) opère sur des cycles non consécutifs du signal d'horloge de réception (H).

**Claims**

1. Error measurement circuit for synchronous digital transmission equipment which transmits a test periodic sequence and delivers in response a receive data synchronous digital signal (S) with its receive clock signal (H) comprising:
    - a cycle stealing circuit (40) operating on the receive clock signal (H),
    - a local generator (20) producing the test periodic sequence clocked by the receive clock signal (H) reaching it via the cycle stealing circuit (40),
    - a comparator circuit (10) for comparing the receive data synchronous digital signal (S) with the test periodic sequence generated by the local generator (20),
    - an error counting circuit (30) on the output side of the comparator circuit (10), and
    - a discordance configuration detector circuit (50) connected on the output side of the comparator circuit (10) and adapted to control the cycle stealing circuit (40) in order to effect cycle stealing in response to successive discordances between the receive synchronous digital signal (S) and the test periodic sequence generated by the local generator (20),

    characterised in that the local generator (20) comprises a memory (21) storing successive samples of the test periodic sequence and a counter (22) for addressing said memory incremented by the receive clock signal (H) via the cycle stealing circuit (40), in that the discordance configuration detector circuit (50) comprises a multistage shift register (51) which is clocked by the receive clock signal (H) and whose data input is connected to the output of the comparator circuit (10) and a multiple input "and" type logic gate (52) with its inputs connected to the outputs of the shift register (51) stages, and in that the cycle stealing circuit (40) comprises:
    - a frequency divider (41) adapted to divide by P where P is an integer greater than 1 and to be incremented by the receive clock signal (H),

- a D type register (42) clocked by the receive clock signal (H) and having its data input connected to the output of the frequency divider (41),
- a first "and" type logic gate (43) with two inputs of which one is connected to the output of the frequency divider (41) and the other is connected to the complemented output $\overline{Q}$ of the type D register (42),
- a "nand" type logic gate (44) having two inputs of which one is connected to the output of the first "and" type logic gate (43) and the other is connected to the output of the discordance configuration detector circuit (50), and
- a second "and" type logic gate (45) having two inputs one of which is connected to the output of the "nand" type logic gate (44) and the other of which receives the receive clock signal (H).

2. Circuit according to claim 1 characterised in that the cycle stealing circuit (40) operates on non-consecutive cycles of the receive clock signal (H).

**Patentansprüche**

1. Kreis zur Messung der Fehlerrate für eine synchrone digitale Übertragungseinrichtung, die eine periodische Testfolge überträgt und als Antwort ein synchrones Datenempfangssignal (S) mit seinem Empfangstaktsignal (H) liefert, wobei der Meßkreis enthält:
   - einen Zyklussprungkreis (40), der vom Empfangstaktsignal (H) gesteuert wird,
   - einen örtlichen Generator (20) für die periodische Testfolge, der mit dem über den Zyklussprungkreis (40) zugeführten Empfangstaktsignal (H) getaktet ist,
   - einen Komparatorkreis (10), der das synchrone Empfangsdatensignal (S) mit der periodischen Testfolge vergleicht, die vom örtlichen Generator (20) erzeugt wird,
   - einen Fehlerzählkreis (30), der hinter dem Komparatorkreis (10) angeordnet ist,
   - und einen Kreis (50) zur Erfassung von Diskordanzkonfigurationen, der hinter dem Komparatorkreis (10) angeordnet ist und den Zyklussprungkreis (40) so steuert, daß Zyklussprünge im Fall von aufeinanderfolgenden Diskordanzen zwischen dem synchronen digitalen Empfangssignal (S) und der periodischen Testfolge veranlaßt werden, die vom örtlichen Generator (20) erzeugt werden,

dadurch gekennzeichnet, daß der örtliche Generator (20) einen Speicher (21), der die aufeinanderfolgenden Tastproben der periodischen Testfolge speichert, und einen Speicheradressenzähler enthält, der vom Empfangstaktsignal (H) über den Zyklussprungkreis (40) inkrementiert wird, daß der Kreis (50) zur Erfassung von Diskordanzkonfigurationen ein Schieberegister (51) mit mehreren Stufen enthält, das vom Empfangstaktsignal (H) getaktet wird und dessen Dateneingang an den Ausgang des Komparators (10) angeschlossen ist, sowie ein logisches UND-Tor (52) mit mehreren Eingängen enthält, die an die Ausgänge der Stufen des Schieberegisters (51) angeschlossen sind, und daß der Zyklussprungkreis (40) aufweist:
   - einen Frequenzteiler(41) durch P, wobei P eine ganze Zahl größer 1 ist und der Teiler durch das Empfangstaktsignal (H) inkrementiert wird,
   - ein Register (42) vom Typ D, das vom Empfangstaktsignal (H) getaktet wird und mit seinem Dateneingang an den Ausgang des Frequenzteilers (41) angeschlossen ist,
   - ein erstes logische UND-Tor (43) mit zwei Eingängen, die an den Ausgang des Frequenzteilers (41) bzw. an den komplementären Ausgang $\overline{Q}$ des Registers (42) vom Typ D angeschlossen sind,
   - ein logisches UND-NICHT-Tor (44) mit zwei Eingängen, die an den Ausgang des ersten logischen UND-Tors (43) bzw. an den Ausgang des Kreises (50) zur Erfassung von Diskordanzkonfigurationen angeschlossen sind, und
   - ein zweites logisches UND-Tor (45) mit zwei Eingängen, von denen einer an den Ausgang des logischen UND-NICHT-Tors (44) angeschlossen ist und der andere das Empfangstaktsignal (H) empfängt.

2. Kreis nach Anspruch 1, dadurch gekennzeichnet, daß der Zyklussprungkreis (40) auf nicht aufeinanderfolgenden Zyklen des Empfangstaktsignals (H) reagiert.